## Europäisches Patentamt
## European Patent Office
## Office européen des brevets

(19)

(11) Veröffentlichungsnummer: **0 141 360**
**B1**

(12) # EUROPÄISCHE PATENTSCHRIFT

(45) Veröffentlichungstag der Patentschrift:
**12.10.88**

(51) Int. Cl.⁴: **C 08 G 81/02, C 04 B 24/38**

(21) Anmeldenummer: **84112714.5**

(22) Anmeldetag: **22.10.84**

(54) **Wasserlösliche, mit Polymeren modifizierte Hydroxyalkylmethylcellulose und deren Verwendung als Zusatzmittel für asbestfreie Fliesenkleber-Formulierungen.**

(30) Priorität: **04.11.83 DE 3339860**

(43) Veröffentlichungstag der Anmeldung:
**15.05.85 Patentblatt 85/20**

(45) Bekanntmachung des Hinweises auf die Patenterteilung:
**12.10.88 Patentblatt 88/41**

(84) Benannte Vertragsstaaten:
**DE FR GB IT SE**

(56) Entgegenhaltungen:
**BE-A-823 869**
**GB-A-1 079 337**

**Die Akte enthält technische Angaben, die nach dem Eingang der Anmeldung eingereicht wurden und die nicht in dieser Patentschrift enthalten sind.**

(73) Patentinhaber: **Wolff Walsrode Aktiengesellschaft, Postfach, D-3030 Walsrode 1 (DE)**

(72) Erfinder: **Böhmer, Branislav, Dr., Moorstrasse 45, D-3030 Walsrode (DE)**
Erfinder: **Lange, Werner, Dr., Im Heidfeld 18, D-2722 Visselhoevede (DE)**
Erfinder: **Höhl, Frank, Brochdorf 52, D-3044 Neuenkirchen (DE)**

(74) Vertreter: **Zobel, Manfred, Dr., c/o BAYER AG Konzernverwaltung RP Patentabteilung Bayerwerk, D-5090 Leverkusen (DE)**

EP 0 141 360 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## 0 141 360

**Beschreibung**

Gegenstand der Erfindung sind wasserlösliche, hochmolekulare Substanzen, die man durch Umsetzung von Hydroxyalkylmethylcellulosen mit Copolymerisaten aus 2-Acryl-amido-2-methyl-propansulfonsäure-(3)/Acrylamid/Ethyl-acrylat und einer bifunktionellen Vernetzerkomponente im alkalischen Milieu erhält. Solche makromolekularen Substanzen eignen sich vorzüglich als Zusatzmittel in astbestfreien Fliesenklebern.

In vielen Fliesenkleberformulierungen wird auch heute Asbest als notwendiges Zusatzmittel verwendet, da dadurch die gewünschte hohe Verdickungsgeschwindigkeit, Quelleigenschaft und ein Atmierungseffekt des Fliesenklebers erreicht wird. Diese Eigenschaften sind erforderlich, um die notwendige Standfestigkeit, Abrutschfestigkeit und Haftzugfestigkeit zu gewährleisten. Da aber die allgemeinen Bemühungen, insbesondere in der Baustoffindustrie, dahingehen, den Asbest zu ersetzen, besteht ein großer Bedarf, Fliesenkleber bereitzustellen, die zumindest den bisherigen asbesthaltigen Fliesenklebern entsprechen, wenn nicht diese übertreffen. Überraschenderweise gelingt dies durch Zusatz der erfindungsgemäßen makromolekularen Substanzen.

Aus der EP-0 014 258 ist zwar bereits die Herstellung von wasserlöslichen makromolekularen Substanzen durch Umsetzung von Cellulosederivaten mit Homo- oder Copolymerisaten von Acrylamid und gegebenenfalls Derivaten der Acrylsäure und einer Verknüpfungskomponente wie Epichlorhydrin bekannt. Solche Produkte können auch als Zusatzstoffe zu Bauwerkstoffen, vorzugsweise zu Trockenputz auf Gipsbasis, verwendet werden. Verwendet man diese makromolekularen Substanzen als Zusatzmittel in den Fliesenkleber-Formulierungen, so findet man, daß solche Fliesenkleber nicht den gewünschten Qualitätsanforderungen in allen Belangen entsprechen.

Dies gelingt mit den erfindungsgemäßen wasserlöslichen, hochmolekularen Substanzen, hergestellt durch Umsetzung von

1. 85 bis 97 Gew.-%, vorzugsweise 90 bis 92 Gew.-%, einer Hydroxy($C_2$-$C_3$)alkylmethylcellulose (HAMC) mit vorzugsweise Substitutionsgraden im Bereich von $DS_M = 1,35 - 1,9$ und $MS_{HP} = 0,05 - 0,35$ bzw. $MS_{HE} = 0,05 - 0,50$ ($DS_M$ = durchschnittlicher Substitutionsgrad an Methoxy, MS = molarer Substitutionsgrad) und

2. 3 -15 Gew.-%, vorzugsweise 8 - 10 Gew.-% eines statistischen Copolymerisats, das aus
   a) 30 - 75 Mol-%, vorzugsweise 40 - 70 Mol-% 2-Acrylamido-2-methylpropansulfonsäure-(3) (AMPS®).
   b) 15 - 35 Mol-%, vorzugsweise 20 - 30 Mol-% Acrylamid (AAm) und
   c) 10 - 50 Mol-%, vorzugsweise 10 - 30 Mol-%, Ethylacrylateinheiten (EA)
   aufgebaut ist, und

3. 0,2 - 1,2 Mol, vorzugsweise 0,3 - 0,9 Mol pro Mol Polymerisat 2, einer bifunktionellen Verknüpfungskomponente, besonders bevorzugt Epichlorhydrin, wobei die Summe aus a-c immer 100 Mol-% ergeben muß,

im alkalischen Milieu mit einer Gesamtmenge der Lauge im Bereich von 1,98 bis 3,08 g NaOH/100 g HAMC, vorzugsweise 2,08 - 2,98 g NaOH/100 g HAMC, besonders bevorzugt von 2,28 bis 2,78 g NaOH/100 g HAMC. AMPS® ist ein Warenzeichen der Lubricol Corporation.

Ein weiterer Gegenstand der vorliegenden Erfindung ist die Verwendung der erfindungsgemäß hergestellten makromolekularen Substanzen als Zusatzmittel, vorzugsweise in Mengen von mindestens 0,4 Gew.-%, besonders bevorzugt von mindestens 0,6 Gew.-% in asbestfreien Fliesenklebern-Formulierungen.

Als erfindungsgemäß verwendete Komponente 1 wird bevorzugt Hydroxyethylmethylcellulose (HEMC) oder Hydroxypropylmethylcellulose (HPMC) verwendet.

Sie kann aus einer diskontinuierlichen, halb- oder vollkontinuierlichen Herstellung nach bekannter Art stammen. Für die Modifizierungsreaktion wird sie aus dem Herstellungsprozeß - vorteilhaft nach dem Salz-Auswaschverfahrensschritt, wobei der Restsalzgehalt 3 Gew.-% nicht überschreiten soll - abgenommen und im feuchten Zustand verwendet. Der Feuchtigkeitsgehalt der HAMC liegt üblicherweise im Bereich zwischen 45 - 70 Gew.-%.

Auch HAMC-Produkte mit noch niedrigeren Wassergehalten sind nicht auszuschließen, sie erschweren aber die gute Verteilung der wäßrigen Polymerlösung. Um dann trotzdem eine gute Kontaktierung der Komponenten zu gewährleisten, soll die Polymerlösung und/oder Natronlauge mit einer niedrigeren Konzentration benutzt werden.

HAMC-Produkte mit höheren Wassergehalten sind auch einsetzbar.

Die erfindungsgemäß modifizierten Hydroxyalkylmethylcellulosen sollen Substitutionsgrade in den Bereichen

$$DS_M = 1,35 - 1,90 / MS_{HP} = 0,05 - 0,35 \text{ bzw. } / MS_{HE} = 0,05 - 0,50$$

aufweisen. Der summarische (Gesamt) Substitutionsgrad liegt dann im Bereich von 1,40 - 2,25 bzw. 1,40 - 2,40.

Besondere Bedeutung hat die $MS_{HA}$-Substitution, die vorteilhaft im Bereich 0,10 - 0,25 liegen soll.

Eine solche für erfindungsgemäße Modifizierung eingesetzte HAMC sollte eine dynamische Viskosität in 2-%-iger wäßriger Lösung bei pH = 7 (Rotovisko MVII D = 2,55 sec$^{-1}$) in einem Bereich von 3.000 bis 40.000 mPa.s, bevorzugt um 10.000 mPa.s auf.

Das für die erfindungsgemäße Modifizierung als Komponente 2 verwendete Copolymerisat wird vorzugsweise durch eine übliche radikalische Lösungspolymerisation in entionisiertem Wasser unter Verwendung üblicher Starter, wie Kaliumpersulfat, hergestellt.

Die verwendeten Monomere können gleichzeitig oder nacheinander dem Wasser zugesetzt werden. Um eine bessere Verteilung der Monomere zu erreichen, kann das Ethylacrylat mit einer kleinen Menge eines anionischen Tensides vermischt werden. Durch die Einstellung eines pH-Wertes um 1, durch abgestufte $K_2S_2O_8$-Zugabe, durch einen Kettenlänge-Regler (Hydrochinon) und durch niedrige Temperaturen kann ein heftiger Reaktionsablauf vermieden und gleichzeitig das Entstehen von Terpolymerisaten mit höheren Molekulargewichten ermöglicht werden.

Nach der Polymerisation liegt das Produkt als 15 - 20 gew.-%-ige wäßrige Lösung vor. Für die HAMC-Modifizierungen eignen sich besonders vorteilhaft Produkte, die eine Grenzviskosität $[\eta]$, gemessen in 0,1 n NaCl/dest. Wasser bei ph 3, von mindestens 4,0 dl/g, bevorzugt $\geqslant$ 5 dl/g aufweisen.

Außer den genannten Monomeren (a, b, c) können für die Herstellung des erfindungsgemäß verwendeten Terpolymerisats auch weitere Monomere d verwendet werden, vobei mindestens ein Monomeres aus den folgenden Gruppen ausgewählt und in Mengen von bis zu 10 Mol-% einpolymerisiert werden kann:

Einfach ethylenisch ungesättigte Monomere mit Sulfonsäure- oder Sulfonsäureester gruppen: Natriumvinylsulfonat (NaVS), Natrium-p-Styrolsulfonat (NaSS), Natrium-2-sulfoethylmethacrylat (NaSEMA), Methacrylsäureamid, vorzugsweise N-Methylacrylamid (MAAm) oder Acrylnitril (AN) ,

$(C_1 - C_6)$Alkyl(meth)acrylate außer Ethylacrylat oder

Vinylmonomere wie Vinylacetat (VAc), Vinylpropionat (VPp)

Als Komponente 3 werden vorzugsweise bekannte bifunktionelle Verknüpfungsmittel wie z. B. Epichlorhydrin eingesetzt. Außerdem können auch die entsprechenden substituierten bifunktionellen Substanzen wie Dichlor-, Diepoxy- oder Monochlormonoepoxy-Derivate eingesetzt werden.

Das Mengenverhältnis der Komponente 3 zur Komponente 2 liegt erfindungsgemäß im Bereich von 0,2 bis 1,2 Mole Verknüpfungsmittel/Mol Polymerisat. Trotz des hohen Einsatzes an Verknüpfungsmittel erhält man hervorragend wasserlösliche Substanzen.

Zur Durchführung der erfindungsgemäßen Modifizierungsreaktion ist ein alkalisches Reaktionsmilieu notwendig. Als Lauge wird die NaOH bevorzugt, da sie die HAMC aktiviert und gleichzeitig als Katalysator bei der Reaktion des Epichlorhydrins mit den beiden Komponenten 1 und 2 wirkt. Dabei sollte die Lauge in definierten Mengen vor der Modifizierungsreaktion zugegeben werden. Die Gesamtmenge der Lauge, die für die Modifizierung notwendig ist, liegt im Bereich von 1,98 bis 3,08 g NaOH/100 g HAMC und wird als 10- bis 30-%-ige wäßrige Lauge eingesetzt.

Die Lauge kann entweder nur einer oder vorzugsweise beiden Komponenten, d. h. HAMC und dem Terpolymerisat (= statistischem Copolymerisat) getrennt zugegeben werden. Es ist auch erfindungsgemäß vorteilhaft, unterschiedliche Lauge-Anteile den Komponenten 1 und 2 zuzusetzen. So sollte in der Regel der Lauge-Anteil höher sein, der dem synthetischen, statistischen Terpolymerisat zugegeben wird. Hier sollte die NaOH-Menge im Bereich zwischen 0 - 30 g/100 g Terpolymerisat, vorteilhaft bei 10 - 20 g/100 g Terpolymerisat liegen. Dagegen hat sich ein Lauge-Anteil für die HAMC im Bereich von 0 - 2,6 g/100 g HAMC, vorteilhaft zwischen 0,7 bis 1,3 g/100 g HAMC als besonders geeignet herausgestellt.

Die Reaktionskomponenten werden vorteilhaft in der Reihenfolge Polymerisat gegebenenfalls mit NaOH und Epichlorhydrin zusammengegeben und vor der Dosierung zur HAMC in einem geeigneten Gefäß mit ausreichender Rührwirkung vorbereitet. Gute Vermischung bei Raumtemperatur kann in einem Autoklav mit Rührwerk (z. B. "Anker-Rührer") erreicht werden.

Im Produktionsmaßstab bei kontinuierlicher oder diskontinuierlicher Fahrweise ist die Vermischung der Komponenten auch in einem Statik-Mischer möglich.

Der Natronlaugeanteil, der der HAMC zugegeben wird, sollte erst kurz vor dem Beginn der Modifizierungsreaktion zu der schon homogenisierten HAMC direkt zugegeben werden. Dies geschieht in dem für die Modifizierung vorgesehenen Aggregat.

Nach ausreichender Vermischung der HAMC/NaOH erfolgt dann die Zugabe des vorbereiteten Polymer-Gemisches. Hier ist die Qualität der Vermischung besonders wichtig. Eine sehr gute Vermischung und Kontaktierung der Komponenten fördert die Modifizierungsreaktion.

Es können nur solche Mischaggregate mit Erfolg eingesetzt werden, bei denen das Gemisch Terpolymerisat/NaOH/Verknüpfungsmittel in dünnen Schichten in die HAMC durch intensives Mischen/Kneten eingearbeitet wird. Im Labor kann mit Erfolg ein Laborkneter mit Grundwerk eingesetzt werden.

Ein aus der diskontinuierlichen MC-Herstellung bekannter und geläufiger Feuchtgutmischer ist für diese Aufgabe nicht geeignet.

Bei einer kontinuierlichen Herstellung eignen sich dafür ein Schnecken- oder Doppelschneckenaggregat oder eine kombinierte Zusammenstellung der Schnecken, die mit Quetsch oder ähnlichen Elementen intensives Mischen/ Kontaktieren erlauben.

Sowohl for die Vermischung der Komponenten als auch für die anschließende Modifizierungsreaktion ist es weiter vorteilhaft, die HAMC nicht in einem ausgeflockten, sondern in einem angequollenen Zustand zu verwenden. Dieser Zustand wird nur unter dem Flockpunkt der HAMC erreicht, vorzugsweise unter 60°C.

Die Reaktionstemperatur sollte auf 60°C bis 95°C eingestellt werden. Zweckmäßig werden Temperaturen von 80 bis 85°C gewählt.

Das Reaktionsprodukt wird dann üblicherweise bei 90 bis 150°C im Trockenschrank oder in einer bei der Methylcellulose-Herstellung üblichen Trocknungseinrichtung getrocknet. Anschließende Mahlung und Aussiebung auf eine Sieblinie ca. 60 % unter 63 µm und ca. 40 % im Bereich von 180 µm bis 63 µm erfolgen

ebenfalls unter Verwendung von üblichen Labor bzw. Produktionseinrichtungen, die in der Methylcellulose-Herstellung verwendet werden.

<u>Anwendungstechnische Untersuchungen</u>

Zur anwendungstechnischen Beurteilung der erfindungsgemäß hergestellten modifizierten Hydroxyalkylmethylcellulosen werden 2 praxisnahe Testmethoden ausgewählt, die die Beurteilung aus der Praxis gut simulieren können und die auch von den Anwendern der Fliesenkleber-Produkte verwendet werden, wie der Abrutschtest und ein Test zur Beurteilung der Standfestigkeit.

1. <u>Methode des Abrutschtests:</u>

- Verwendete Arbeitsgeräte
  200 ml Polybecher (Abmessungen: D oben = 70 mm, D unten = 50 mm, H = 70 mm)
  Rührholz (D = 5 mm, B = 15 mm, L = 258 mm)
  Bürette oder Meßzylinder (50 ml)
  Stoppuhr
  Abrutschklappe
  Kammspachtel (Zahntiefe 4 mm)
  Steinzeugfliese (100 x 100 mm, 200 g)
  3 kg Gewicht
  Nadel
  Lineal

- Fliesenkleber-Grundgemisch
  40 Teile Zement PZ 45 F (Herst. Alsen-Breitenburg, Zement u. Kalkwerk GmbH)
  58,5 Teile Quarzsand F-34 (Herst. Quarzwerke GmbH, Frechen)
  1,5 Teile Dispersionspulver Elotex WS 45® (Herst. Ebnöther AG, Sempach-Station, Schweiz).

- Verwendete Asbest-Typen (für Beurteilungsstandard)
  Chrysotil® 7 RF-1 (Lieferant Osthoff-Petrasch, Hamburg)
  Ghrysotil® 2023 (Lieferant Osthoff-Petrasch, Hamburg)

- Verwendeter Methylcellulose Fliesenkleber
    Walocel® MW 10.000 PFV (Herst. Wolff Walsrode AG, Walsrode)

- Arbeitsvorgang
  Fliesenkleber-Grundgemisch, Asbest und Walocel® MW 10.000 oder erfindungsgemäß hergelltes Additiv gut miteinander vermischen, dann in Polybecher vorlegen,
  Wasser zudosieren (Verhältnis Wasser/Feststoff = 0,30),
  Stoppuhr drücken,
  1 Min. rühren (ca. 60 Upm)        )
  4 Min. stehen lassen              )
  1 Min. rühren                     )        Summe 10 Min.
  3,5 Min. stehen lassen            )
  0,5 Min. rühren,                  )

  Fliesenkleber auf die heruntergeklappte Abrutschklappe aufbringen und aufkämmen (Kammspachtel in 60°C-Neigung halten),
  Fliese (glatte Seite nach unten) auf die Abrutschklappe einlegen,
  in der Mitte mit 3 kg Gewicht belasten,
  währenddessen mit der Nadel Null-Markierung an der oberen Fliesenkante ziehen,
  Fliese entlasten,
  Klappe aufstellen, Stoppuhr drücken,
  Abrutschtiefe nach 1, 3 und 5 Min. mit Nadel an der Fliesenoberkante kennzeichnen.

- Auswertung
  Ausmessen der Abstände der Markierungen in (mm)

4

0 - 1 Min.
0 - 3 Min.
0 - 5 Min.

2. <u>Methode zur Beurteilung der Standfestigkeit:</u>

- Verwendete Arbeitsgeräte
  200 ml Polybecher
  Rührholz (Spachtel)
  Bürette oder Meßzylinder (50 ml)
  Stoppuhr

- Fliesenkleber Grundgemisch
  wie bei der Methode des Abrutschtests
- Verwendete Asbest-Typen
  wie bei der Methode des Abrutschtests
- Verwendete gängige Methylcellulose Fliesenkleber-Type
  wie bei der Methode des Abrutschtests

- Arbeitsvorgang:
  Fliesenkleber-Grundgemisch, Asbest und Walocel® MW 10.000 oder erfindungsgemäß hergestelltes Additiv gut miteinander vermischen, dann in Polybecher vorlegen,
  Wasser zudosieren (Verhältnis Wasser/Feststoff = 0,31),
  Stoppuhr drücken,
  1 Min. rühren (ca. 60 Upm)
  Hauptteil des Fliesenklebers aus dem Becher herausnehmen und auf waagerecht gestelltem Rührholz hochhalten,
  Beurteilung der Standfestigkeit in Prozenten aus der Bewegung des Fliesenklebers auf dem Rührholz gegen Standard,
  4 Min. stehen lassen,
  1 Min. rühren (ca. 60 Upm)
  Hauptteil des Fliesenklebers aus dem Becher herausnehmen und auf waagerecht gestelltem Rührholz hochhalten,
  Beurteilung der Standfestigkeit in Prozenten "nach Scherung" aus der Bewegung des Fliesenklebers auf dem Rührholz.

<u>Herstellung des Polymerisats</u> (Komponente 2)
Polymerisat E:
In einem 1 l Polymerisationskolben mit Rührer, Rückflußkühler und Gaseinleitrohr für Inertgas werden 92,3 g $\hat{=}$ 0,4461 Mol 2-Acrylamido-2-methylpropansulfonsäure-(3) (AMPS®) (Reactions grade, Fa. Lubrizol Corp., USA) vorgelegt.
Danach werden 446,6 g entionisiertes Wasser zugegeben. Zu dieser Lösung werden 47,7 g 30-%-ige Acrylamidlösung (entspricht 0,2008 Mol) und anschließend 13,4 g $\hat{=}$ 0,1339 Mol Ethylacrylat gegeben. Die Konzentration der Monomeren im Wasser entspricht 20 Gew.-%.
Diese Einsatzmengen der Monomere entsprechen dem Mol-Verhältnis von AMPS : AA : EA = 1,0 : 0,45 : 0,30 bzw. in Mol-% ausgedrückt 57 : 26 : 17.
In der gesamten Vorbereitungsphase wird das Gemisch Wasser + Monomere mit Stickstoff stark gespült (Durchlauf ca. 20 l.h$^{-1}$). Danach liegt der Rest-Sauerstoffgehalt vorteilhaft zwischen 1,2 und 1,8 ppm.
Durch die Zugabe eines Tensides, Genapol LRO$^R$, von 0,66 g (0,11 Gew.-% auf die gesamte Lösung) wird die Verteilung des Ethylacrylates verbessert.
Zur Maskierung der in der wäßrigen Acrylamidlösung enthaltenen $Cu^{2+}$-Ionen und zur Verkürzung der Induktionsperiode werden 0,419 g Titriplex III (Dinatriumsalz der Ethylendiamin-Tetraessigsäure, 0,35 Gew.-% auf Monomere) zugesetzt.
Außerdem sind zur Regelung der Kettenlänge 0,01 Gew.-% Hydrochinon auf Monomere zugesetzt.
In dem Reaktionsgemisch ergibt sich ein pH-Wert um 1; falls vor der Herstellung eine neutralisierte AMPS vorliegt, muß diese auf den pH-Wert um 1 mit Salzsäure eingestellt werden.
Nach der Beendigung der Zugaben wird die Lösung mit etwa 400 Upm gerührt und mit ca. 10 l.h$^{-1}$ Stickstoff weiter gespült.
Das Reaktionsgemisch wird auf 34° C erwärmt.
30 Minuten nach dem Erreichen der Temperatur erfolgt der Start der Polymerisation mit 0,005 Gew.-% $K_2S_2O_8$ (entsprechend 0,006 g bezogen auf die Monomereinwaage).
Nach etwa einer Stunde erfolgt ein Viskositätsanstieg. Durch weitere Initiatorzugaben von 0,01 Gew.-% $K_2S_2O_8$ nach 1, 2, 4 und 6 h bzw. 0,1 Gew.-% nach 9 h wird die Reaktion zu Ende geführt.
Das Ende der Reaktion wird durch die Bestimmung der Restmonomere festgestellt.

**0 141 360**

Danach wird die gebildete Polymerisat-Lösung mit Wasser auf eine Konzentration von 15 Gew.-% verdünnt. Das erhaltene Endprodukt ist durch folgende Angaben charakterisiert:

| | |
|---|---|
| pH-Wert | = 0,6 |
| Konz. | = 14 Gew.-% |
| Rel. Viskosität (VT 24 Haake) | = 24.000 |
| Grenzviskosität [η] | = 5,85 dl/g |

Nach diesem Verfahren werden auch weitere Terpolymerisate A - Q, die in der Tabelle 1 zusammengestellt sind, hergestellt.

**Tabelle 1**

Terpolymerisate

| Be-zeich-nung | AMPS (Mol-%) | AAm (Mol-%) | EA (Mol-%) | Konzentration vor und nach der Reaktion (Gew.-%) | | End-pH Wert | rel. Viskosit. (Viskotester Haake VT 24) | Grenzviskosität [η] (dl/g) |
|---|---|---|---|---|---|---|---|---|
| A | 75,0 | 15,0 | 10,0 | 25 | 15 | 0,5 | 14.000 | 4,5 |
| B | 68,6 | 20,0 | 11,4 | 20,2 | 15 | 1,0 | 21.000 | 4,3 |
| C | 61,5 | 28,2 | 10,2 | 20,0 | 15 | 0,6 | 28.000 | 6,1 |
| D | 61,5 | 17,9 | 20,5 | 20,2 | 15 | 0,6 | 20.000 | 5,1 |
| E | 57,1 | 25,7 | 17,1 | 20 | 14 | 0,6 | 24.000 | 5,8 |
| F | 57,1 | 25,7 | 17,1 | 20 | 15 | 0,6 | 41.000 | 7,1 |
| G | 51,6 | 22,5 | 25,8 | 20,1 | 15 | 0,9 | 32.000 | 5,2 |
| H | 45,7 | 31,4 | 22,8 | 20,1 | 15 | 0,7 | 43.000 | 5,4 |
| I | 40,0 | 30,0 | 30,0 | 25 | 15 | 1,0 | - | 6,1 |
| J | 30,0 | 30,0 | 40,0 | 25 | 15 | 1,6 | 82.000 | 9,0 |
| K | 30,0 | 20,0 | 50,0 | 25 | 15 | 1,8 | 26.000 | 4.7 |
| L | 20,0 | 30,0 | 50,0 | 25 | 15 | 1,8 | z.T.gelartig | - |
| M | 90,0 | 6,0 | 4,0 | 24,9 | 14,8 | 0,6 | 9.000 | 3,5 |
| N | 15,0 | 85,0 | 0,0 | 24,6 | 14,8 | 0,6 | 11.000 | 4,2 |
| O | 15,0 | 30,0 | 55,0 | 24,8 | - | nicht meßbar, gelartig | | - |
| P | 0,0 | 45,0 | 55,0 | 24,7 | - | nicht ausreagiert, ca. 50 % Restmonomere | | - |
| Q | 10,0 | 40,0 | 50,0 | 20,0 | - | nicht meßbar, gelartig | | - |

Die wichtigsten Charakterisierungsdaten der HAMC-Typen, die bei der erfindungsgemäßen Modifizierung verwendet worden sind, sind in der Tabelle 2 zusammengefaßt.

**Tabelle 2**

Verwendete HAMC

| Bezeich-nung der HAMC-Type | Feststoff % | RT-MV II D=2,55 sec⁻¹ Viskosität V₂ (atro) (mPa.s) | NaCl-Gehalt % | DS$_M$1) | MS$_{HA}$2) | Art des zweiten Substituenten |
|---|---|---|---|---|---|---|
| HAMC-1 | 45,7 | 9.230 | 2,1 | 1,73 | 0,10 | HP3) |
| HAMC-2 | 41,0 | 13.200 | 2,9 | 1,44 | 0,15 | HP |
| HAMC-3 | 48,5 | 5.670 | 2,8 | 1,61 | 0,14 | HP |
| HAMC-4 | 36,7 | 7.100 | 2,8 | 1,49 | 0,08 | HP |
| HAMC-5 | 54,9 | 4.420 | 2,2 | 1,70 | 0,39 | HP |
| HAMC-6 | 41,7 | 11.730 | 2,4 | 1,40 | 0,23 | HE + HP |
| HAMC-7 | 36,5 | 6.500 | 2,5 | 1,39 | 0,07 | HE4) |
| HAMC-8 | 43,4 | 9.620 | 2,8 | 1,87 | 0,11 | HP |
| HAMC-9 | 41,5 | 9.490 | 2,7 | 1,57 | 0,12 | HP |
| HAMC-10 | 42,8 | 8.900 | 2,9 | 1,69 | 0,11 | HP |
| HAMC-11 | 42,3 | 8.040 | 2,0 | 1,57 | 0,10 | HP |
| HAMC-12 | 44,1 | 8.430 | 2,1 | 1,62 | 0,10 | HP |
| HAMC-13 | 51,1 | 3.100 | 2,3 | 1,83 | 0,47 | HE |
| HAMC-14 | 58,1 | 14.930 | 2,6 | 1,75 | 0,64 | HE |

1) = Methoxy
2) = Hydroxyalkoxy
3) HP = Hydroxypropoxy
4) HE = Hydroxyethoxy

**Beispiele 1 - 20**

Beispiel 1:
In einem Labor-Kneter mit Grundwerk (LK) werden 681,6 g HAMC (mit einer Substitution DS = 1,73, MS = 0,10 und Feststoffgehalt von 45,7 Gew.-%) und 28,1 ml 10-%-iger Natronlauge (entspr. 1,0 g NaOH/100 g HAMC) gegeben und bei Raumtemperatur 15 Minuten lang verknetet.

Gleichzeitig werden in einem separaten Gefäß 220 g des 15 gew.-%-igen Polymerisats mit 15,5 ml 25-%-iger Natronlauge (entspr. 16 g/100 g Polymerisat) ebenfalls bei Raumtemperatur 15 Minuten lang verrohrt. Danach werden 8,0 g Epichlorhydrin als Verknüpfungsmittel (entspr. Mol % Polymer : Epichlorhydrin 66,7 : 33,3) 15 Minuten lang mit dem Polymerisat vermischt.

Die Polymer-NaOH-Epichlorhydrin-Mischung wird dann zur HAMC im Verhältnis HAMC : Polymerisat 91 : 9 in den Kneter gegeben. Unter ständigem Kneten wird die Temperatur durch Aufheizen des Kneters von ca. 25 - 30°C innerhalb von 30 Minuten auf 60°C gebracht.

Der Zeitpunkt nach Erreichen der Temperatur 60°C wird als Beginn der Modifizierungsreaktion betrachtet. Die Dauer der Reaktion beträgt 2 Stunden bei 60°C.

Danach wird das Produkt aus dem Kneter herausgenommen, auf Blechschalen in einen Trockenschrank gegeben und 3 Stunden bei 150°C getrocknet.

Anschließend wird das getrocknete Produkt in einer Bauermeister-Labormühle gemahlen und auf eine Sieblinie von

60 % < 0,063 mm
40 % > 0,063 mm und < 0,180 mm

ausgesiebt.

Die so hergestellten Produkte, deren Ausgangskomponenten und Herstellungsparameter in der Tabelle 3 dargelegt sind, werden wie die asbesthaltigen Fliesenkleben getestet. Die Testergebnisse sind in Tabelle 4 und die Vergleichsteste als Standards zu den asbesthaltigen Fliesenkleber-Formulierungen in Tabelle 5 angegeben.

## Tabelle 3
### Herstellungsbedingungen und Parameter

| Beispiel Nr. | HAMC-Type | Polymer Type | Verhältnis HAMC/Polym. (Teil/Teil) | Verhältnis Polym./Ep (Mol/Mol) | NaCH (g/100g HAMC) | NaCH (g/100g Polym.) | Reaktions-aggregat | Aufheiz./Mischzeit (Min.) | Reaktions-zeit (Min.) | Reaktions-temperatur (°C) |
|---|---|---|---|---|---|---|---|---|---|---|
| 1 | HAMC-1 | E | 91/9 | 1,0/0,5 | 1,0 | 16,0 | LK | 30' | 120' | 60 |
| 2 | HAMC-1 | E | 91/9 | 1,0/0,5 | 0,9 | 16,0 | LK | 30' | 120' | 60 |
| 3 | HAMC-1 | E | 91/9 | 1,0/0,5 | 0,8 | 16,0 | LK | 30' | 120' | 60 |
| 4 | HAMC-1 | E | 91/9 | 1,0/0,5 | 1,0 | 15,0 | LK | 30' | 120' | 60 |
| 5 | HAMC-2 | F | 91/9 | 1,0/0,7 | 0,9 | 18,3 | LK | 30' | 120' | 60 |
| 6 | HAMC-1 | E | 91/9 | 1,0/0,5 | 1,1 | 14,0 | LK | 30' | 120' | 60 |
| 7 | HAMC-3 | E | 91/9 | 1,0/0,5 | 1,0 | 16,0 | WP-K | 20' | 120' | 60 |
| 8 | HAMC-3 | E | 91/9 | 1,0/0,3 | 0,7 | 16,0 | WP-K | 20' | 120' | 60 |
| 9 | HAMC-8 | G | 91/9 | 1,0/0,5 | 0,9 | 14,0 | LK | 40' | 120' | 60 |
| 10 | HAMC-4 | F | 91/9 | 1,0/0,6 | 0,9 | 18,3 | LK | 30' | 60' | 80 |
| 11 | HAMC-4 | E | 91/9 | 1,0/0,8 | 0,9 | 18,3 | LK | 30' | 120' | 60 |
| 12 | HAMC-6 | E | 91/9 | 1,0/0,5 | 1,0 | 16,0 | WP-K | 20' | 60'+60' | 60+90 |
| 13 | HAMC-7 | F | 91/9 | 1,0/0,5 | 1,0 | 16,0 | WP-K | 20' | 60'+60' | 60+90 |
| 14 | HAMC-10 | E | 91/9 | 1,0/1,0 | 1,0 | 16,0 | LK | 30' | 120' | 60 |
| 15 | HAMC-10 | E | 91/9 | 1,0/0,5 | - | 26,1 | LK | 30' | 120' | 60 |
| 16 | HAMC-10 | E | 91/9 | 1,0/0,5 | 2,58 | - | LK | 30' | 120' | 60 |
| 17 | HAMC-10 | E | 91/9 | 1,0/0,5 | 2,58* | - | LK | 30' | 120' | 60 |
| 18 | HAMC-10 | E | 91/9 | 1,0/0,5 | 0,7 | 16,0 | LK | 30' | 120' | 60 |
| 19 | HAMC-13 | E | 91/9 | 1,0/0,5 | 1,0 | 16,0 | LK | 20' | 60'+60' | 60+90 |
| 20 | HAMV-12 | K | 91/9 | 1,0/0,5 | 0,8 | 15,0 | LK | 30' | 120' | 60 |

\* Zugabe der Natronlauge nachdem die Komponenten 1, 2 und 3 vermischt worden sind

## Tabelle 4

### Testergebnisse der modifizierten Produkte

| Beispiel Nr. | Fliesenkleber Grundgemisch (g) | Modif. HAMC Menge (g) | Verhältnis Wasser/ Feststoff | Standfestigkeit n. 1Min. Rührzeit (%) | Standfestigkeit n. 5 Min. und Scherung (%) | Abrutschen nach 1 Min. (mm) | Abrutschen nach 3 Min. (mm) | Abrutschen nach 5. Min. (mm) |
|---|---|---|---|---|---|---|---|---|
| 1 | 100 | 0,65 | 0,31 | 100 | 100 | 0 | 0 | 0 |
| 2 | 100 | 0,65 | 0,31 | 100 | 100 | 0 | 0 | 0 |
| 3 | 100 | 0,65 | 0,31 | 100 | 100 | 0 | 0 | 0 |
| 4 | 100 | 0,65 | 0,31 | 100 | 97,5 | 0 | 0 | 0 |
| 5 | 100 | 0,65 | 0,31 | 100 | 100 | | | |
| 6 | 100 | 0,65 | 0,31 | 97,5 | 95 | | | |
| 7 | 100 | 0,65 | 0,31 | 100 | 100 | | | |
| 8 | 100 | 0,65 | 0,31 | 100 | 95 | | | |
| 9 | 100 | 0,65 | 0,31 | 100 | 95 | 0 | 0 | 0 |
| 10 | 100 | 0,65 | 0,31 | 100 | 97,5 | | | |
| 11 | 100 | 0,65 | 0,31 | 95 | 95 | | | |
| 12 | 100 | 0,65 | 0,31 | 100 | 97,5 | 0 | 0 | 0 |
| 13 | 100 | 0,65 | 0,31 | 100 | 97,5 | 0 | 1,0 | 1,5 |
| 14 | 100 | 0,65 | 0,31 | 100 | 95 | 2 | 3 | 3 |
| 15 | 100 | 0,65 | 0,31 | 97,5 | 95 | 1 | 1 | 1 |
| 16 | 100 | 0,65 | 0,31 | 100 | 95 | 4 | 9,5 | 14 |
| 17 | 100 | 0,65 | 0,31 | 95 | 90 | 15 | 40 | 80 |
| 18 | 100 | 0,65 | 0,31 | 100 | 97,5 | 1 | ,5 2,5 | 2,5 |
| 19 | 100 | 0,60 | 0,30 | 100 | 97,5 | 0 | ,5 1 | 2,5 |
| 20 | 100 | 0,65 | 0,31 | 100 | 97,5 | - | - | - |

**Tabelle 5**
Testergebnisse mit Formulierungen, die Asbest beinhalten,
als Beurteilungsstandard

| Nr. des Standards | Fliesenkleber Grudgemisch (g) | Asbest Chrysotil® 7RF-1 (g) | Walocel® MW 10.000PFV (g) | Standfestigkeit | | Abrutschen nach | | |
|---|---|---|---|---|---|---|---|---|
| | | | | nach 1 Min. Rührzeit (%) | nach "Scherung" (%) | 1 Min. (mm) | 3 Min. (mm) | 5 Min. (mm) |
| 1 | 110 | - | 0,6 | 60 | 65 | 40 | | |
| 2 | 99,5 | 0,5 | 0,6 | 65 | 70 | 11,0 | 32,0 | 54,0 |
| 3 | 99,4 | 0,6 | 0,6 | 70 | 75 | 6,5 | 18,0 | 31,5 |
| 4 | 99,3 | 0,7 | 0,6 | 75 | 85 | 6,0 | 14,0 | 23,5 |
| 5 | 99,2 | 0,8 | 0,6 | 80 | 87,5 | 3,5 | 8,0 | 14,0 |
| 6 | 99,1 | 0,9 | 0,6 | 85 | 90 | 1,5 | 2,5 | 4,0 |
| 7 | 99,0 | 1,0 | 0,6 | 87,5 | 95 | 1,0 | 1,5 | 3,0 |
| 8 | 98,9 | 1,1 | 0,6 | 90 | 95 | 1,0 | 1,0 | 1,0 |
| 9 | 98,8 | 1,2 | 0,6 | 92,5 | 97,5 | 1,0 | 1,0 | 1,0 |
| 10 | 98,7 | 1,3 | 0,6 | 95 | 97,5 | 1,0 | 1,0 | 1,0 |
| 11 | 98,6 | 1,4 | 0,6 | 97,5 | 97,5 | 0 | 0 | 0 |
| 12 | 98,5 | 1,5 | 0,6 | 97,5 | 100 | 0 | 0 | 0 |
| 13 | 98,4 | 1,6 | 0,6 | 100 | 100 | 0 | 0 | 0 |
| 14 | 99,9 | 0,1 | 0,6 | 65 | 70 | 13,5 | 42,0 | 80,5 |
| 15 | 99,8 | 0,2 | 0,6 | 70 | 80 | 3,5 | 8,5 | 15,5 |
| 16 | 99,7 | 0,3 | 0,6 | 80 | 90 | 1,5 | 1,5 | 1,5 |
| 17 | 99,8 | 0,4 | 0,6 | 85 | 92,5 | 0 | 0 | 0 |
| 18 | 99,5 | 0,5 | 0,6 | 95 | 95 | 0 | 0 | 0 |
| 19 | 99,4 | 0,6 | 0,6 | 97,5 | 100 | 0 | 0 | 0 |
| 20 | 99,3 | 0,7 | 0,6 | 100 | 100 | 0 | 0 | 0 |

**Patentansprüche**

1. Wasserlösliche, hochmolekulare Substanzen, hergestellt durch Umsetzung von
    1. 85 bis 97 Gew.-% einer Hydroxy ($C_2$ - $C_3$) alkylmethylcellulose ( = HAMC).
    2. 3 bis 15 Gew.-% eines statistischen Copolymerisats aus
        a) 30 bis 75 Mol-% 2-Acrylamido-2-methyl-propansulfonsäure-(3) ( = AMPS®)
        b) 15 bis 35 Mol-% Acrylamid ( = AAm),
        c) 10 bis 50 Mol-% Ethylacrylat ( = EA)
        d) und gegebenenfalls bis zu 10 Mol-% wenigstens eines Monomeren ausgewählt aus der Gruppe bestehend aus einfach ethylenisch ungesättigten Monomeren mit einer Sulfonsäure- oder Sulfonsäureestergruppe Methacrylsäureamid, N-Methylacrylamid, Acrylnitril, ($C_1$-$C_6$) Alkyl(meth)acrylate außer Ethylacrylat oder Vinylmonomere.
    3. 0,2 bis 1,2 Mol pro Mol der Komponente 2 einer bifunktionellen Verknüpfungskomponente,
im alkalischen Milieu, wobei die Gesamtmenge der Lauge im Bereich von 1,98 bis 3,08 g NaOH/100 g HAMC liegt und die Summe von 2a) - 2c) 100 Mol-% ergibt.
2. Hochmolekulare Substanzen nach Anspruch 1 hergestellt durch Umsetzung von 90 - 92 Gew.-% der Komponente 1, 8 - 10 Gew.-% der Komponente 2, und 0,3 - 0,9 Mol der Komponente 3/Mol Polymerisat 2, in Gegenwart von 2,08 - 2,98 g NaOH/100 g HAMC.
3. Hochmolekulare Substanzen nach Anspruch 1 oder 2, dadurch gekennzeichnet, daß als Komponente 1, eine HAMC mit Substitutionsgraden
$DS_M$ = 1,35 -1,9 und
$MS_{HP}$ = 0,05 - 0,35 bzw.
$MS_{HE}$ = 0,05 - 0,5
verwendet wird.
4. Hochmolekulare Substanzen nach Anspruch 3, dadurch gekennzeichnet, daß als Komponente Hydroxyethylmethylcellulose oder Hydroxypropylmethylcellulose verwendet wird.
5. Hochmolekulare Substanzen nach Ansprüchen 1 - 4, dadurch gekennzeichnet, daß die Komponente 2, aus

9

40 - 70   Mol-%   AMPS-,
20 - 30     "      AAm- und
10 - 30     "      EA-einheiten

aufgebaut ist.

6. Verwendung der hochmolekularen Substanzen gemäß Anspruch 1 als Additiv in asbestfreien Fliesenkleber-Formulierungen.

## Claims

1. Water-soluble, high molecular weight substances prepared by the reaction of
   1. 85 to 97 % by weight of a hydroxy($C_2$ - $C_3$)alkylmethyl-cellulose (HAMC),
   2. 3 to 15 % by weight of a random copolymer of
      a) 30 to 75 mol-% of 2-acrylamido-2-methylpropane sulphonic acid-(3) (AMPS®),
      b) 15 to 35 mol-% of acrylamide (AAm),
      c) 10 to 50 mol-% of ethyl acrylate (EA) and
      d) optionally up to 10 mol-% of at least one monomer selected from monoethylenically unsaturated monomers containing a sulphonic acid or sulphonic acid ester group, methacrylic acid amide, N-methylacrylamide, acrylonitrile and ($C_1$-$C_6$) alkyl(meth)acrylate excluding ethyl acrylate and vinyl monomers, and
   3. 0.2 to 1.2 mol per mol of component 2 of a bifunctional linking component
in analkaline medium, the total quantity of alkali being in the range of from 1,98 to 3,08 g of NaOH per 100 g of HAMC and the sum of 2a) to 2c) being 100 mol-%.

2. High molecular weight substances according to claim 1 prepared by the reaction of 90 to 92 % by weight of component 1, 8 - 10 % by weight of component 2 and 0.3 to 0.9 mol of component 3 per mol of polymer 2 in the presence of 2.08 - 2.98 g of NaOH per 100 g of HAMC.

3. High molecular weight substances according to claim 1 or 2, characterised in that the substance used as component 1 is a HAMC with degrees of substitution of

$$DS_M = 1.35 - 1.9 \text{ and}$$
$$MS_{HP} = 0.05 - 0.35 \text{ or}$$
$$MS_{HE} = 0.05 - 0.5$$

4. High molecular weight substances according to claim 3, characterised in that the substance used as component is hydroxyethylmethyl cellulose or hydroxypropylmethyl cellulose.

5. High molecular weight substances according to claims 1 to 4, characterised in that component 2 is built up

of 40 to 70     mol-%     of AMPS
   20 to 30       "        of AAm and
   10 to 30       "        of EA units.

6. Use of the high molecular weight substances according to claim 1 as additive in asbestos-free formulations for tile adhesives.

## Revendications

1. Substances hydrosolubles de haut poids moléculaire, préparées par réaction
   1. de 85 à 97 % en poids d'une hydroxy(alkyle en $C_2$ ou $C_3$)méthylcellulose ( =HAMC),
   2. de 3 à 15 % en poids d'un copolymérisat statistigue formé de
      a) 30 a 75 moles % d'acide 2-acrylamido-2-méthylpropanesulfonique-(3) ( = AMPS®)
      b) 15 à 35 moles % d'acrylamide ( =AAm),
      c) 10 à 50 moles % d'acrylate d'éthyle ( = EA)
      d) et le cas échéant jusqu'à 10 moles % d'au moins un monomère choisi dans le groupe comprenant des monomères à une seule non-saturation éthylénique avec un groupe acide sulfonique ou ester d'acide sulfonique, l'amide d'acide méthacrylique, le N-méthylacrylamide, l'acrylonitrile, des (méth)acrylates d'alkyle en $C_1$ à $C_6$ hormis l'acrylate d'éthyle ou des monomères vinyliques,
   3. de 0,2 à 1,2 mole, par mole du composant 2, d'un composant bifonctionnel de jonction,
en milieu alcalin, la quantité totale de lessive se situant dans l'intervalle de 1,98 à 3,08 g de NaOH/100 g de HAMC, et la somme de 2a) à 2c) donnant 100 moles %.

2. Substances de haut poids moléculaire suivant la revendication 1, préparées par réaction de 90 à 92 % en poids du composant 1, de 8 à 10 % en poids du composant 2 et de 0,3 à 0,9 mole du composant 3 par mole de polymérisat 2, en présence de 2,08 à 2,98 g de NaOH/100 g de HAMC.

3. Substances de haut poids moléculaire suivant la revendication 1 ou 2, caractérisées en ce qu'on utilise comme composant 1 une HAMC présentant les degrés de substitution

$DS_M$ = 1,35 - 1,9 et
$MS_{HP}$ = 0,05 - 0,35 et respectivement
$MS_{HE}$ = 0,05 - 0,5

4. Substances de haut poids moléculaire suivant la revendication 3, caractérisées en ce qu'on utilise comme composant l'hydroxyéthylméthylcellulose ou l'hydroxypropylméthylcellulose.

5. Substances de haut poids moléculaire suivant les revendications 1 à 4, caractérisées en ce que le composant 2 est constitué

de     40 à 70 moles % de motifs AMPS-,
de     20 à 30 moles % de motifs AAM- et
de     10 à 30 moles % de motifs EA

6. Utilisation des substances de haut poids moléculaire suivant la revendication 1 comme additif dans des formulations de colles sans amiante pour carreaux.